# EUROPÄISCHE PATENTANMELDUNG

(11) **EP 0 666 299 A1**
(43) Veröffentlichungstag der Anmeldung: **09.08.1995**
(21) Anmeldenummer: 95100601.4
(22) Anmeldetag: 18.01.1995
(51) Int. Cl.: C10B 53/00

(54) **Verfahren zur Rückgewinnung von Rohstoffen und Energie aus polymeren Chlorkohlenwasserstoffen**

(30) Priorität: 02.02.1994 DE 4403128
(71) Anmelder: VESTOLIT GmbH, D-45753 Marl (DE)
(72) Erfinder: Meyer, Heinz Hermann, Dr., D-45770 Marl (DE); Nettelnbreker, Hans-Jürgen, D-45721 Haltern (DE); Rengshausen, Heinz, D-48653 Coesfeld (DE); Schirmeister, Reinhard, Dr., D-45772 Marl (DE)

(57) **Zusammenfassung**

Mit dem vorliegenden Verfahren werden vorzugsweise chlorhaltige Kunststoffreste zu niedermolekularen Verbindungen abgebaut.

Dazu werden die Kunststoffreste zunächst bis zur Schmelze und anschließend bis etwa 400 °C erhitzt, wobei der Hauptanteil an Chlor abgezogen wird. Der dabei entstehende Schaum wird zerkleinert und bis zum gewünschten Chlorgehalt bei Temperaturen von 350 bis 450 °C in Abwesenheit oder bei Temperaturen von 300 bis 400 °C in Anwesenheit eines Katalysators weiterbehandelt.

## Beschreibung

Die Erfindung betrifft Verfahren und Ausführungsformen zur Rückgewinnung von Rohstoffen und Energie aus chlorhaltigen Kunststoffen oder Kunststoffgemischen, wie sie nach Gebrauch und als Produktionsreste anfallen, und bezieht sich insbesondere auf PVC und PVC/Polyolefin-Gemische mit mehr als 12 Gew.-% Chlor, vorzugsweise mit mehr als 15 Gew.-% Chlor.

Polymere Werkstoffe oder Kunststoffe im allgemeinen haben einen Lebens-Zyklus von einigen Monaten bis zu einigen Jahrzehnten. Heute bieten sich verschiedene technische Möglichkeiten an, verbrauchte Kunststoffe zu verwerten vgl. z. B. Th. Geiger et al., Chem. Ing. Techn. 65 (1993), S. 703 - 709. Eine lange geübte Praxis besteht darin, sie über den Haus- oder Industriemüll zu entsorgen, d. h. zu deponieren oder in geeigneten Müllverbrennungsanlagen zu verbrennen.

Eine in jüngster Zeit besonders diskutierte Form der umweltschonenden Stoffumwandlung von Entsorgungsgütern aller Art (DE-OS 41 30 416) umfaßt ein chargenweises Kompaktieren des Entsorgungsgutes zu Paketen, die formschlüssig durch einen auf über 100 °C erhitzten Kanal gleicher Querdimensionen geschoben werden. Nach Durchlaufen dieses Kanals haben sich brockige Konglomerate gebildet, die in den Schacht eines Hochtemperatur-Vergasungsofens fallen und dort bei ca. 2 000 °C unter vollständiger Kohlenstoffvergasung (Sauerstoffzufuhr) zu Synthesegas umgesetzt werden. Der Rest fällt als Metallschmelze und Schlacke an.

In den vergangenen Jahren sind auch andere Verwertungsmöglichkeiten, insbesondere für Verpackungskunststoffe erschlossen worden, teilweise unter dem Druck ökonomischer, ökologischer sowie politischer Vorgaben.

Dazu zählen die Wiederverwendung sortenrein gesammelter Kunststoffe und sortenreiner Produktionsrückstände für bestimmte gleichwertige oder weniger anspruchsvolle Einsatzgebiete und die Verwertung der durch gezielten Abbau der Makromoleküle erhaltenen Rohstoffe in bestehenden Kreisläufen.

Der gegenwärtige Stand der Technik solcher thermischer Abbauverfahrern für chlorhaltige hochmolekulare Stoffe und der dabei verfolgten Zielrichtungen kann wie folgt dargestellt werden:

Chlorhaltige Polymere, insbesondere PVC, werden bei erhöhter Temperatur, wahlweise unter Mitwirkung von Katalysatoren wie Zinkchlorid, entchlort. Das Chlor wird dabei teils als Salz (DT-A 22 60 393 sowie JA 029 657) gebunden, überwiegend aber als Chlorwasserstoff in Form der wäßrigen Säure (JA 136 625) oder gasförmig (JA 007 832 sowie JA 104 106) verwendet.

Der Rückstand wird häufig zu Aktivkohle bzw. Ruß aufgearbeitet (JA 034 824, JA 039 132, JA 074 436, JA 004 245) oder verbrannt.

Seit einigen Jahren stehen die durch gezielte Entchlorung von PVC darstellbaren leitfähigen Polyene im Vordergrund (JP 042 33917).

In der DE-OS 40 38 896 wird die Verwertung von Kunststoffrückständen aus oder mit PVC beschrieben, wobei hier der Chloranteil sowie der Kohlenwasserstoffanteil im PVC in metallurgischen Reaktionen verwendet werden soll. Dabei wird PVC den metall- oder metallverbindungshaltigen Stoffen durch Pelletisierung zugemischt und bei erhöhter Temperatur zur Reaktion gebracht. Andere vorgeschlagene Methoden sind eine Eindüsung in die Metallschmelze bzw. die Umsetzung als Pulver in der Gasphase.

In der DE-OS 41 07 046 wird gleichfalls ein Verfahren zum Verwerten von organischen Abfällen unter Gewinnung von Wert- oder Brennstoffen (bei 350 bis 550 °C) mit vorgeschalteter Chlorwasserstoffabspaltung beschrieben, wobei letztere bei ca. 300 °C im Extruder erfolgt. Die dort aufgeführte Vorrichtung soll es ermöglichen, solche Stoffe in den zu behandelnden Rückstand einzubringen, die bekanntermaßen den Molmassenabbau beeinflussen, wie z. B. Luftsauerstoff, Wasser, Katalysatoren wie Metalle oder deren Oxide.

Die nach der Chlorwasserstoffabspaltung aus PVC oder PVC-haltigem Mischkunststoff verbleibenden Rückstände der benannten Verfahren weisen für eine rohstoffliche Verwendung zur Synthesegaserzeugung meist zu hohe Gehalte an Restchlor und anderen störenden anorganischen Stoffen auf. Entsprechendes gilt auch für den Einsatz in Hydrierungen. Weiterhin besteht die Vermutung, daß insbesondere bei Sauerstoffzuspeisung auch polychlorierte Dibenzodioxine (PCDD) und polychlorierte Dibenzofurane (PCDF) in relevanten Mengen entstehen können.

Mit dem erfindungsgemäßen Verfahren werden Nachteile des Standes der Technik überwunden. Dabei werden die folgenden Zielsetzungen erreicht:
1. Die Abspaltung des organisch gebundenen Chlors (ca. 57 Gew.-% im reinen PVC) ermöglicht dessen technische Wiederverwendung in Form von Chlorwasserstoff für Synthesen (z. B. Oxichlorierung) und damit das Schließen des sogenannten Chlorkreislaufes. In Abhängigkeit von anderen störenden Stoffen (Füllstoffe und Pigmente) wird letztlich das wirtschaftlich und technisch sinnvolle Verwertungsverfahren für den festen Rückstand nach der Chlorwasserstoffabspaltung bestimmt. Zur Absenkung des anorganisch gebundenen Chlorgehaltes im Rückstand können dabei geeignete Extraktionsverfahren nachgeschaltet werden.
2. Zur Vermeidung erheblicher Nebenproduktbildung in dem bei der thermischen Abspaltung des HCl erhaltenen Gas wird dieser Verfahrensschritt bei möglichst niedriger Temperatur im Bereich von 300 bis 500 °C durchgeführt werden. Der Chlorwasserstoff ist vor dem Einsatz in weiteren Synthesen in geeigneter Weise, z. B. über Nachverbrennung mit nachfolgendem Absorptions-/Desorptionsverfahren, zu reinigen.
3. Bei der HCl-Abspaltung wird ein Sauerstoffzutritt durch Einspeisen von Inertgas verhindert, um die Bildung von PCDD und PCDF nicht zu begünstigen.
4. Die Abspaltung des Chlorwasserstoffs kann durch geeignete Katalysatoren intensiviert und zu niedrigeren Temperaturen verschoben werden. Inwieweit eine Katalysatorabtrennung bzw. Rückgewinnung notwendig ist, hängt von der Verwertung des festen Rückstandes ab.

Der nach HCl-Abspaltung aus reinem PVC theoretisch verbleibende feste C-H-Rest enthält ca. 82,3 % C und 7,2 % H. Der tatsächliche C-H-Gehalt hängt vom Einsatzgemisch ab.

Die chlorhaltigen Einsatzstoffe können in folgender Form vorliegen:
- Roh-PVC aus der Produktion; dieses kann vermischt sein mit Vinylchlorid-Copolymeren wie Vinylacetat oder mit Pfropfcopolymeren wie Polybutylacrylat. In jedem Fall handelt es sich um Komponenten, die während der Thermolyse Sauerstoffverbindungen abspalten; ihre Anwesenheit kann den Verlauf des Zerfalls und die Natur der Zerfallsprodukte beeinflussen. Diese Reste können anorganische Salze enthalten.
- PVC-Compoundreste vermischt mit Hilfsstoffen wie Weichmachern, Kreide, Metallorganylen der Kationen Ca, Zn, Sn, Cd, Pb, u. a. (Stabilisatoren, Gleitmittel etc.).
- Gemischtkunststoffreste, d. h. PVC vermischt mit nicht-chlorhaltigen Polymeren und Hilfsstoffen wie vorstehend genannt.
- Chlorwasserstoffreste.

Die verwendeten Reste sind von fester oder flüssiger Konsistenz. Sie fallen entweder nach Abschluß eines Gebrauchszyklus an oder resultieren als Reststoffe aus Produktions- oder Verarbeitungsverfahren.

Es ist zweckmäßig, vor dem eigentlichen Dehydrochlorierungsschritt die festen PVC-haltigen Reststoffe zu zerkleinern und mit den flüssigen Komponenten in geeigneter Weise zu vereinigen.

Eine besonders wirksame Form der Dehydrochlorierung unter den beanspruchten Bedingungen wird dann erreicht, wenn das unter Druck stehende, geschmolzene Polymergemisch plötzlich unter Schaumbildung in eine Zone höherer Temperatur entspannt wird. Infolge Vernetzung der entstandenen Polyenstrukturen verfestigt sich der Schaum und kann zu feinteiligem Pulver zerkleinert werden.

Muß man aus technischen Gründen (z. B. Wärmeeinkopplung, Vermeidung von Feinstaub im Abgas der Thermolyseeinrichtung oder Feinstaubproblemen in der Kühlung/Befeuchtung des festen Thermolyserückstandes) die Pulverphase umgehen, so kann dem Thermolyse-Feed oder dem feinen Pulver nach Ende der Zersetzung eine erforderliche Menge an Polyolefinen (wie PE, PP) zugemischt werden.

Apparate für die technische Durchführung der thermischen oder katalytischen HCl-Abspaltung müssen in geeigneter Weise
- die ausreichende Wärmeeinkopplung
- eine ausreichende Verweilzeit
- eine geeignete Feststoff- oder Schmelzeförderung
- die Vermeidung bzw. Abreinigung von Verkokungen und Anbackungen
- die Gasdichtigkeit gegen HCl-Austritt bei der Feststoffaufgabe, Katalysatoreinspeisung und beim Austrag
- hohe Korrosionsbeständigkeit und geringen Verschleiß
sicherstellen bei in der Regel kontinuierlicher Betriebsweise.

Als Reaktoren werden in der Praxis beheizte Rührkessel, Drehrohre, Apparate mit ein- und mehrwelligen Förderschnecken oder Wirbelschichten eingesetzt (Th. Geiger et al., Chem. Ing. Techn. 65 (1993) S. 703 - 709 und vorgenannte Patentliteratur).

Sind in den Einsatzstoffen bereits Polyolefinanteile enthalten oder werden, wie oben beschrieben, solche Stoffe zugeführt, so kann bekanntermaßen z. B. ein Extruder als Thermolysegerät eingesetzt werden, wobei gegebenenfalls in einem nachgeschalteten, großvolumigen Reaktor mit Förderaggregat die HCl-Abspaltung fortgeführt wird.

Die Herstellung eines feinkörnigen, rieselfähigen Thermolyserückstandes ist von erheblichem Vorteil für verschiedene rohstoffliche und thermische Verwertungsverfahren, da der sonst meist erforderliche Feinmahlungsschritt entfallen kann. Wegen der Reaktionsfähigkeit des Thermolyserückstandes muß der Austrag und die Abkühlung des Pulvers unter Luftausschluß erfolgen.

Als Katalysatoren haben sich die unter dem Namen Lewis-Säuren bekannten Metallhalogenide (AlCl₃, BiCl₃, FeCl₃, ZnCl₂) gut bewährt, insbesondere Wismutchlorid. Gute Ergebnisse liefert auch Aluminiumchlorid in Form eines Komplexes mit Dibenzyltoluol (MARLOTHERM S) und Chlorwasserstoff, ähnlich den mit anderen Aromaten beschriebenen Friedel-Crafts-Katalysatoren oder Rotölen.
Diese Katalysatoren werden in Konzentrationen von 0,01 bis 10 mol-%, vorzugsweise 0,05 bis 5 mol-%, bezogen auf die chlorhaltige Grundeinheit, eingesetzt.

Unter den verwendeten Polymerresten befinden sich auch Compounds mit einer Vielzahl verschiedener anorganischer und organischer Metallverbindungen oder auch Metallresten. Diese werden unter den Bedingungen der Dehydrochlorierung teilweise in Metallchloride oder Metalloxichloride umgewandelt.
Sie können aus dem Pulver durch Eluieren mit heißem Wasser oder heißer Salzsliure entfernt werden.

Der abgespaltene Chlorwasserstoff kann nach der Reinigung wieder für chemische Synthesen eingesetzt werden.

Neben der wichtigen Rückführung des Chloranteils aus PVC-haltigen Reststoffen in PVC-Vorprodukte (Schließung des Chlorkreislaufes) sind damit - in Abhängigkeit von den anorganischen Begleitstoffen - auch für den C-H-Rest vielfältige Verwertungsmöglichkeiten gegeben. 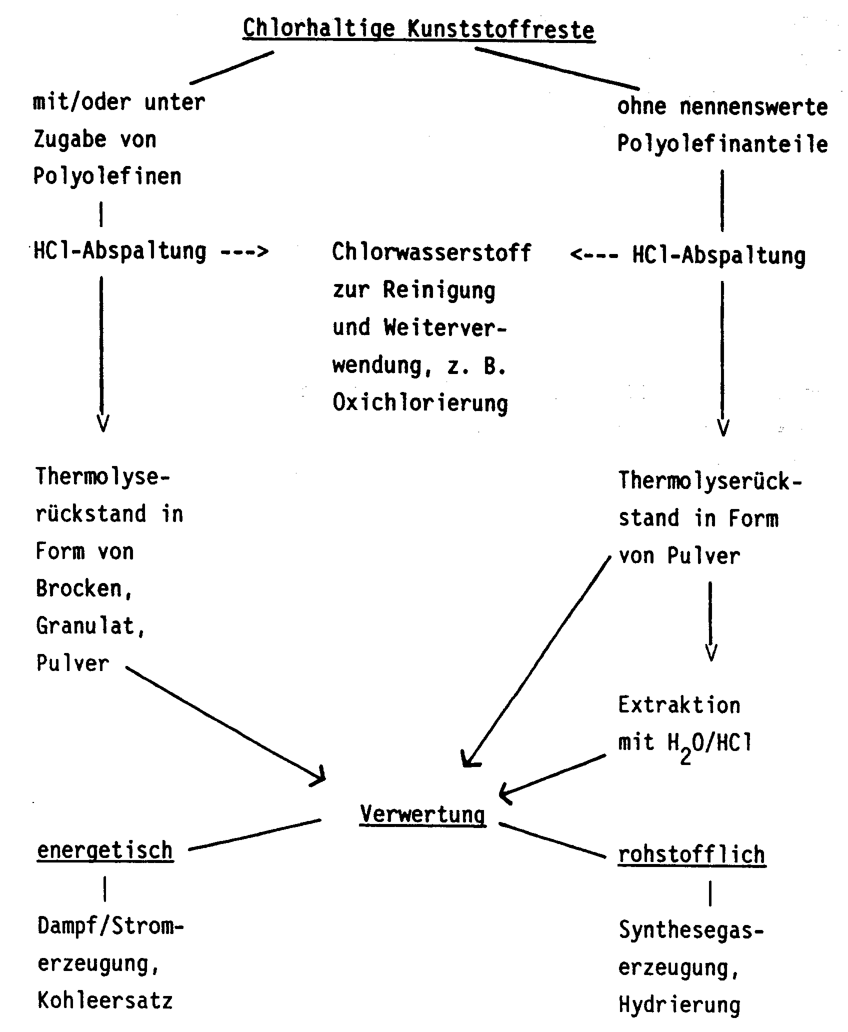
Gemäß den Zielvorgaben umfaßt das beanspruchte Verfahren zur Dehydrochlorierung chlorhaltiger Kunststoffe die folgenden Teilschritte:
Für die zu lösende Aufgabe einer vollständigen Entchlorung bei möglichst tiefen Temperaturen und falls erforderlich unter Schutzgas, gegebenenfalls unter Zusatz von Katalysatoren, ist es von Vorteil, wenn das zu dehydrochlorierende Gut schnell auf die Schmelztemperatur gebracht wird, z. B. durch Ausnutzen der Friktionswärme im Extruder. Dazu wird der eingespeiste chlorhaltige Kunststoff im 1. Teil der Thermolysevorrichtung unter Überdruck von 0 bis 20 bar und kontinuierlicher Förderung bis zur Schmelze bei T₁ (ca. 180 bis 250 °C) erhitzt. Der Überdruck dient zum energiesparenden Transport der Abgasmengen zur Reinigungsstufe der Abgase.
Hierbei kann zur Entfernung von Restfeuchten eine Trocknung mit separater Gasabführung bei Temperaturen bis zu 200 °C vorgelagert sein.

Im 2. Teil der Thermolysevorrichtung wird die Schmelze unter weiterer kontinuierlicher Förderung und Entspannung in ein größeres Volumen rasch auf eine Temperaturstufe T₂ (300 bis 400 °C, vorzugsweise 350 bis 400 °C) erhitzt. Dabei tritt unter Gasabspaltung von im wesentlichen HCl und Benzol eine Verschäumung unter Volumenzunahme um das 2- bis 8-fache ein. Gleichzeitig mit dem HCl-Verlust bilden sich aus den chlorhaltigen Makromolekülen Polyene, die rasch in Netzwerke umgewandelt werden, so daß nach einer bestimmten Verweilzeit bei T₂ sowie unter der Einwirkung zerkleinernder Kräfte ein feinteiliges Pulver resultiert.
Die Verweilzeit bei T₂ ist nun weiter so zu bemessen, daß das organisch gebundene Chlor nahezu quantitativ als HCl-Gas abgezogen werden kann. Dazu kann es notwendig sein, die Temperatur auf ein höheres Niveau T₃ (350 bis 450 °C) anzuheben, eventuell über ein vorgegebenes Temperaturprofil. Gegebenenfalls können zur Beschleunigung der möglichst vollständigen Dehydrochlorierung in diesem zweiten Teil auch Katalysatoren, wie oben beschrieben, eingesetzt werden; bei Temperaturen von 300 bis 400 °C. Die Verweilzeit in der Thermolyseeinrichtung beträgt etwa 60 Minuten. Die Abkühlung des Pulvers ist unter Luftabschluß bzw. Inertgas vorzunehmen.

Wenn es erstrebenswert ist, die Pulverphase beim Rückstand, wie vorher ausgeführt, zu vermeiden, so sollte das Eingangsmaterial eine entsprechende Menge an Polyolefinen (> 20 %) enthalten, so daß der Polyacetylenrest in die Schmelzephase eingebunden wird.
Eine Verlängerung der Verweilzeit zur wirksameren Abspaltung des Chlorwasserstoffs kann dadurch erzielt werden, daß die Schmelze in einem inneren oder äußeren Kreislauf geführt wird.

Schließlich erfolgt in einer räumlich getrennten 3. Stufe bei T₄ (80 bis 100 °C), falls erforderlich, die Entfernung der Metallchloride und -oxichloride durch Zugabe von Wasser oder Salzsäure. Letztere kann natürlich auch in situ aus dem freigesetzten Chlorwasserstoff gebildet werden. Die Metallchloride können sich im Verlaufe des Thermolyseprozesses aus Metallorganylen (Stabilisatoren, Gleitmitteln ...) oder Füllstoffen oder Metallanteilen gebildet haben oder aus dem eingesetzten Katalysator resultieren.

Sofern keine Extraktion der Chloride durchgeführt werden soll, erfolgt nach der zweiten Stufe der Austrag des Thermolyserückstands z. B. über eine Kühlschnecke. Durch geeignete Führung der Kühlung bis zum Feststoff und geeignete Gestaltung der Schneckenelemente am Austrag kann der feste Rückstand in zerkleinerter brockiger Form erhalten werden oder in nachgeschalteten geeigneten Einrichtungen fein zerkleinert werden.

Als Thermolyseeinrichtung kommen für kurze Verweilzeiten im Minutenbereich z. B. Doppelschneckenextruder mit Zwangsförderung in Frage. Bei längerer Verweilzeit sind großvolumige Apparate mit Förder- und Abreinigungseinrichtungen erforderlich. Die HCl-Abspaltung ist vorzugsweise bei Überdruck auszuführen, um das entstehende Abgas aus HCl und organischen Verbindungen (Benzol, Toluol u. a. Kohlenwasserstoffe sowie chlorhaltige Verbindungen) direkt an eine Verbrennungsanlage und angeschlossener HCl-Rückgewinnung (über Absorptions-/Desorption) abgeben zu können. Die Kondensation der organischen Bestandteile und deren aufwendige Behandlung kann damit vermieden werden, Probleme mit Absaugung/Gebläse zur Gasförderung entfallen.

## Patentansprüche

1. Verfahren zur Rückgewinnung von Rohstoffen und Energie aus chlorhaltigen Kunststoffresten, deren Mischungen mit anderen Polymeren oder Chlorkohlenwasserstoffen,
dadurch gekennzeichnet,
daß die in einer vorgeschalteten kontinuierlichen Trocknung bei bis zu 200 °C erhaltenen Kunststoffreste (Pulver, Granulat, Schnitzel etc.), falls erforderlich unter Schutzgas und Druck, zunächst bis zur beginnenden Schmelzebildung, gegebenenfalls unter Verwendung von Katalysatoren, erhitzt werden, dann die entstandene Kunststoffschmelze unter Entspannung auf eine Temperatur von 300 bis 400 °C gebracht wird, wobei der größte Teil des Chlors als HCl-Gas abgezogen wird und durch die dabei stattfindende Aufschäumung der Schmelze ein sich verfestigender Schaum entsteht, der durch Einwirkung zerkleinernder Kräfte in ein feinteiliges Pulver übergeht, welches bei einer Temperatur von 350 bis 450 °C in Abwesenheit oder bei einer Temperatur von 300 bis 400 °C in Anwesenheit eines Katalysators bis zum gewünschten Chlorgehalt weiterbehandelt wird. Die Abkühlung des Pulvers ist unter Luftabschluß bzw. Inertgas vorzunehmen.

2. Verfahren nach Anspruch 1,
dadurch gekennzeichnet,
daß zur Vermeidung einer Pulverphase, falls aus technischen Gründen gefordert, im Einsatzgemisch Feed der Thermolyseeinrichtung ein Polyolefinanteil > 20 % sichergestellt wird bzw. das Pulver nach erfolgter HCl-Abspaltung in einen entsprechenden Polyolefinanteil eingebunden wird. Der so erhaltene Thermolyserückstand wird hinter dem Schmelzeaustritt nach Abkühlung einer Zerkleinerung, mit oder ohne Wasserzusatz, unterzogen.

3. Verfahren nach Anspruch 1,
dadurch gekennzeichnet,
daß in der Thermolyseeinrichtung eine Verweilzeit bis 60 min eingestellt werden kann, um eine ausreichende Chlorabspaltung zu erzielen.

4. Verfahren nach Anspruch 1,
dadurch gekennzeichnet,
daß die Thermolyse bei einem Überdruck von 0 bis 20 bar durchgeführt wird, um einen ausreichenden Vordruck für den Transport der Abgasmengen und zur Reinigung der Abgase, vorzugsweise in einer nachgeschalteten Verbrennung mit nachfolgender HCl-Absorption/Desorption, zu erzielen.

5. Verfahren nach Anspruch 1,
dadurch gekennzeichnet,
daß als Katalysatoren Lewissäuren-Metallhalogenide in Mengen von 0,05 bis 5 mol-%, bezogen auf die Grundeinheit des chlorhaltigen Kunststoffes, eingesetzt werden.

6. Verfahren nach Anspruch 1,
dadurch gekennzeichnet,
daß die eventuell im Endprodukt noch vorhandenen Metallchloride und - oxichloride durch Zugabe von Wasser oder Salzsäure bei erhöhter Temperatur entfernt werden.
